# EUROPEAN PATENT APPLICATION

(11) **EP 4 484 656 A2**
(43) Date of publication of application: **01.01.2025**
(21) Application number: 24182108.1
(22) Date of filing: 13.06.2024
(51) Int. Cl.: E02F 9/20

(54) **WORKING MACHINE**

(30) Priority: 30.06.2023 JP 2023107904
(71) Applicant: KUBOTA CORPORATION, Osaka-shi, Osaka 556-8601 (JP)
(72) Inventor: YOSHIDA, Kenichiro, SAKAI-SHI, OSAKA, 5900908 (JP); NISHIRA, Yusuke, SAKAI-SHI, OSAKA, 5900908 (JP); OMORI, Hideki, SAKAI-SHI, OSAKA, 5900908 (JP)
(74) Representative: Cabinet Beau de Loménie

(57) **Abstract**

A working machine includes a machine body (2); an operator's seat (6) mounted on the machine body (2); a console (17R) disposed beside the operator's seat (6); and a communication device (38) disposed inside the console (17R). Furthermore, the console (17R) includes a first side wall portion located beside the operator's seat (6) and a second side wall portion (34b) provided beside the first side wall portion with a gap interposed therebetween on a side opposite to the operator's seat (6), and the communication device (38) is disposed between the first side wall portion and the second side wall portion (34b) so as to be located closer to the second side wall portion (34b).

## Description

### BACKGROUND OF THE INVENTION

### Field of the Invention

The present invention relates to a working machine such as a backhoe.

### Description of the Related Art

A working machine disclosed in Japanese Unexamined Patent Application Publication No. 2021-150829 is known.

In the working machine disclosed in Japanese Unexamined Patent Application Publication No. 2021-150829, a console is disposed beside an operator's seat mounted on a machine body, and a communication device is disposed in front of this console.

### SUMMARY OF THE INVENTION

When a communication device is viewable from an outside of a working machine and is easily accessible, there is a high risk of theft.

In view of the above problem, an object of the present invention is to provide a working machine that can prevent or reduce theft of a communication device.

A working machine according to an aspect of the present invention includes a machine body; an operator's seat mounted on the machine body; a console disposed beside the operator's seat; and a communication device disposed inside the console.

The console may include a first side wall portion located beside the operator's seat and a second side wall portion provided beside the first side wall portion with a gap interposed therebetween on a side opposite to the operator's seat. The communication device may be disposed between the first side wall portion and the second side wall portion so as to be located closer to the second side wall portion.

The communication device may include an indicator provided on a side facing the second side wall portion. The second side wall portion may include a view hole through which the indicator is viewable from an outside of the console.

The working machine may include a device bracket to which the communication device is attached. The console may include a console bracket directly or indirectly attached to the machine body. The console bracket may include a support plate disposed between the first side wall portion and the communication device. The device bracket may be disposed between the support plate and the communication device and may be attached to the support plate.

The working machine may include an electric component disposed between the support plate and the first side wall portion; and a mounting stay to which the electric component is attached. The communication device may include a communication antenna. The device bracket may be attached to the support plate so that the communication antenna is disposed higher than the support plate. The mounting stay may be fixed to the support plate so as to protrude upward from the support plate and may include a cutout portion formed by cutting out a portion corresponding to the communication antenna.

The console may be disposed beside the operator's seat in a machine body width direction and may include a mobile terminal holder that is capable of holding a mobile terminal so that a display screen of the mobile terminal faces the operator's seat. The mobile terminal holder may be provided closer to the operator's seat in the machine body width direction than a center of the console in the machine body width direction.

The mobile terminal holder may be recessed from an upper side toward a lower side and may include an upper end edge portion that forms an upper end opening, a bottom portion that supports a lower end of the mobile terminal, and a groove portion that is provided over a range from the upper end edge portion to the bottom portion and is opened from an internal space of the mobile terminal holder toward the operator's seat.

The mobile terminal holder may include a wall portion which a surface of the mobile terminal opposite to the display screen faces in a state where the mobile terminal is contained so that the display screen faces the operator's seat. The wall portion may be inclined away from the operator's seat toward an upper side.

The console may include at least one switch provided on an upper portion of the console. The operator's seat may include a seat portion on which an operator sits and a backrest portion against which the operator leans his or her back. The switch may be disposed beside the operator's seat and may be located forward of the backrest portion, and may be inclined away from the operator's seat toward a front side in plan view.

The switch may be provided on a side opposite to the operator's seat in a machine body width direction with respect to a center of the console in the machine body width direction and may be located at a position corresponding to a position above the communication device.

The working machine may include a prime mover mounted on the machine body; a hood to cover the prime mover; and a support frame to support the hood, the support frame standing on the machine body inside the hood. The console may be attached to the support frame.

According to the above working machine, theft of a communication device can be prevented or reduced by disposing the communication device inside a console. In addition, outer appearance of the working machine can be improved.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a side view of a working machine.
FIG. 2 is a perspective view of members such as a machine body, a driving unit, and a canopy.
FIG. 3 is a back cross-sectional view of a machine body rear portion.
FIG. 4 is a perspective view of the machine body, a hood, and the driving unit viewed diagonally from a rear right side.
FIG. 5 is a perspective view of a right portion of the driving unit viewed from a left side.
FIG. 6 is a perspective view of a swivel frame, a support frame, and a console.
FIG. 7 is a perspective view of a right console from which a console cover has been removed.
FIG. 8 is a perspective view of members such as the console cover.
FIG. 9 is a side view of the console illustrating the console cover by an end view.
FIG. 10 is a back view of the console illustrating the console cover by an end view.
FIG. 11 is a plan view of the console illustrating the console cover by an end view.
FIG. 12 is a plan view of an operator's seat and the console.
FIG. 13 is a perspective view illustrating an attachment state of a console bracket.
FIG. 14 is an exploded perspective view of the console bracket.
FIG. 15 is an exploded perspective view of the console bracket, a communication device, and a device bracket.
FIG. 16 is a side view of the communication device, a mounting stay, and a second side plate.
FIG. 17 is a plan view of the communication device, the mounting stay, and the second side plate.
FIG. 18 is a perspective view of the communication device, the mounting stay, and the second side plate.
FIG. 19 is a side perspective view of an indicator and a view hole.
FIG. 20 is a cross-sectional plan view of a mobile terminal holder.
FIG. 21 is a cross-sectional back view of the mobile terminal holder.
FIG. 22 is a perspective view of an attachment portion of an IPU.
FIG. 23 is an exploded perspective view of the IPU.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

An embodiment of the present invention is described below while referring to the drawings as appropriate.

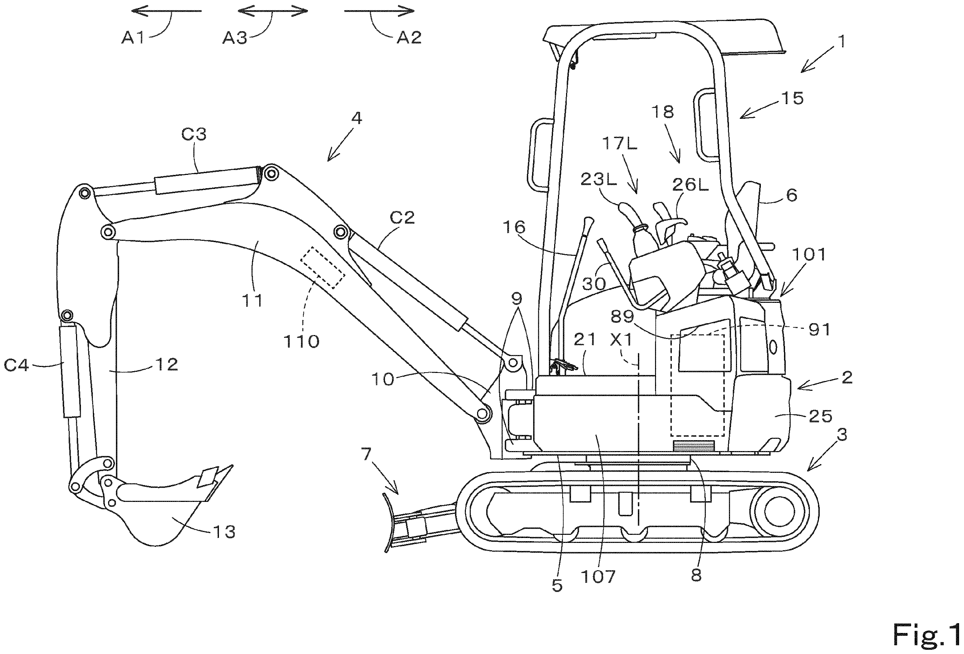

FIG. 1 is a schematic side view illustrating an overall configuration of a working machine 1 according to the present embodiment. In the present embodiment, a backhoe, which is a swivel working machine, is illustrated as the working machine 1.

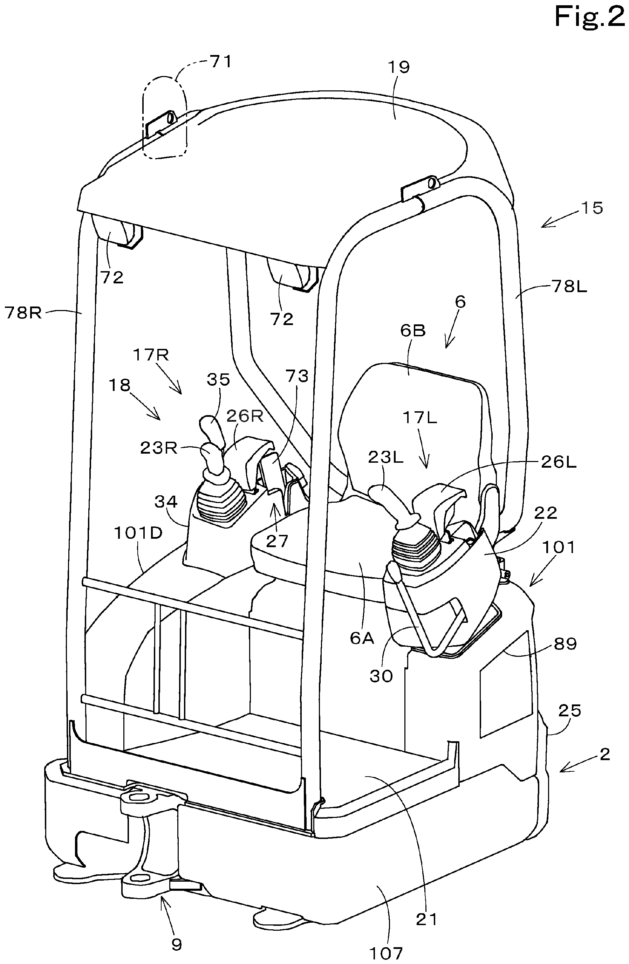

As illustrated in FIG. 1, the working machine 1 includes a machine body (swivel base) 2, a traveling device 3, and a working device 4. The machine body 2 is provided with an operator's seat 6 on which an operator (driver) sits and a canopy 15. As illustrated in FIG. 2, the operator's seat 6 includes a seat portion 6A and a backrest portion 6B. The seat portion 6A is a portion on which the operator sits (places his or her buttocks and thighs). The backrest portion 6B is a portion against which the operator leans his or her back, and extends upward from a rear portion of the seat portion 6A. The canopy 15 is a four-pillar type canopy and may, for example, define a rollover protective structure (ROPS).

Note that although the working machine 1 provided with the canopy 15 (canopy-equipped working machine) is illustrated in the present embodiment, the working machine 1 may be a working machine 1 provided with a cabin surrounding the operator's seat 6 (cabin-equipped working machine) instead of the canopy 15 or may be a working machine 1 without the canopy 15 and without a cabin.

In the present embodiment, a direction (a direction indicated by arrow A1 in FIG. 1) pointing forward of the operator sitting on the operator's seat 6 of the working machine 1 is referred to as a forward direction (forward of the machine body), a direction (a direction indicated by arrow A2 in FIG. 1) pointing rearward of the operator is referred to as a rearward direction (rearward of the machine body), and a direction indicated by arrow A3 in FIG. 1 is referred to as a front-rear direction (machine body front-rear direction). A direction pointing leftward of the operator (near side of FIG. 1) is referred to as a leftward direction, and a direction pointing rightward of the operator (deep side of FIG. 1) is referred to as a rightward direction.

A horizontal direction orthogonal to the front-rear direction A3 is referred to as a machine body width direction (a width direction of the machine body 2). A direction pointing rightward or leftward from a central portion of the machine body 2 in the width direction is referred to as being outward in the machine body width direction. That is, being outward in the machine body width direction is a direction pointing away in the machine body width direction from a center of the machine body 2 in the width direction. A direction opposite to the outward direction in the machine body width direction is referred to as being inward in the machine body width direction. That is, being inward in the machine body width direction is a direction pointing toward the center of the machine body 2 in the width direction in the machine body width direction.

As illustrated in FIG. 1, the traveling device 3 is a crawler-type traveling device that supports the machine body 2 and is capable of traveling. Although the crawler-type traveling device 3 is used in the present embodiment, this does not imply any limitation, and a wheel-type traveling device may be used. A dozer device 7 is attached to a front portion of the traveling device 3.

As illustrated in FIG. 1, the machine body 2 includes a swivel board 5 that is made of a thick plate member defining a bottom portion of the machine body 2. The swivel board 5 is supported on the traveling device 3 with a swivel bearing 8 interposed therebetween so as to be capable of swiveling about a swivel axis X1 extending in an up-down direction. The swivel board 5 is driven by a swivel motor (hydraulic motor) to swivel about the swivel axis X1.

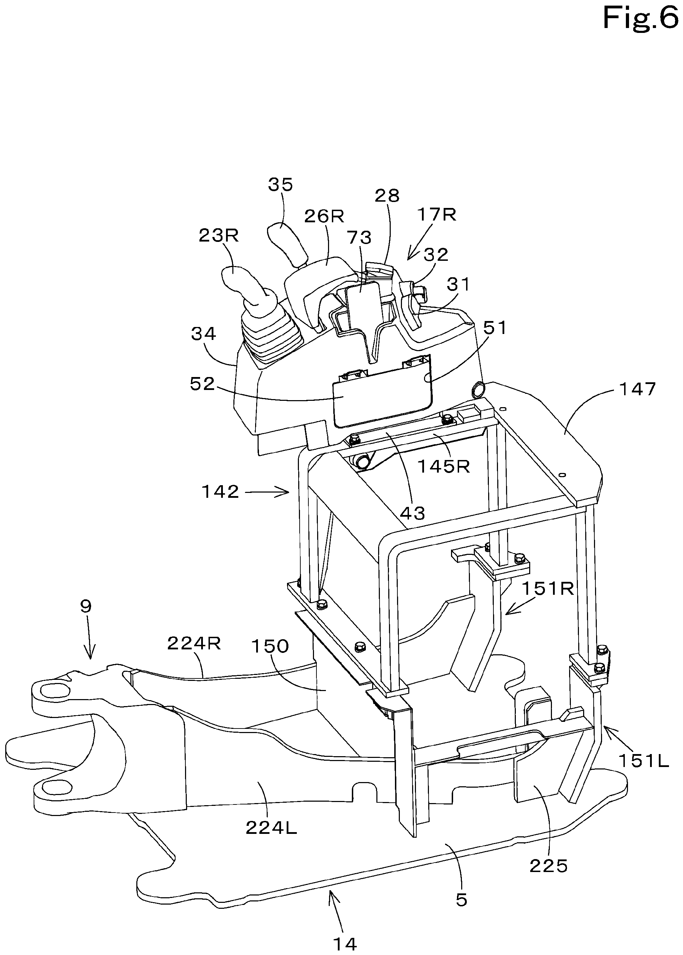

Furthermore, the machine body 2 includes, on a front portion, a support bracket 9 and a swing bracket 10 that support the working device 4. The support bracket 9 protrudes forward from the machine body 2 (see FIG. 6). The swing bracket 10 is attached to a front portion of the support bracket 9 so as to be capable of swinging about a vertical axis (an axis extending in the up-down direction).

As illustrated in FIG. 1, the working device 4 includes a boom 11, an arm 12, and a working tool 13. In the present embodiment, a bucket is illustrated as the working tool 13. A base portion of the boom 11 is pivotally attached to an upper portion of the swing bracket 10 so as to be rotatable about a horizontal axis (an axis extending in the machine body width direction). A working lamp 110 is provided at an intermediate portion of the boom 11 in a longitudinal direction. In the present embodiment, the working lamp 110 is attached to a right side of the boom 11.

The arm 12 is pivotally attached to a front end of the boom 11 so as to be rotatable about the horizontal axis. The bucket 13 is provided at a front end of the arm 12 so as to be capable of performing a shoveling action and a dumping action.

The swing bracket 10 is made swingable by extension and contraction of a swing cylinder (not illustrated).

As illustrated in FIG. 1, a floor portion 21 on which the operator places his or her feet is provided on an upper surface of the machine body 2 in front of the operator's seat 6. The floor portion 21 is, for example, configured such that a floor mat is laid on a step plate disposed above the swivel board 5 with a gap interposed therebetween and supported on the swivel board 5.

As illustrated in FIG. 1, a weight 25 that achieves weight balance with the working device 4 is disposed in a rear portion of the machine body 2. Furthermore, a prime mover 91 is mounted in a rear portion of the machine body 2. The working machine 1 according to the present embodiment is a small-sized backhoe in which the operator's seat 6 is disposed above the prime mover 91.

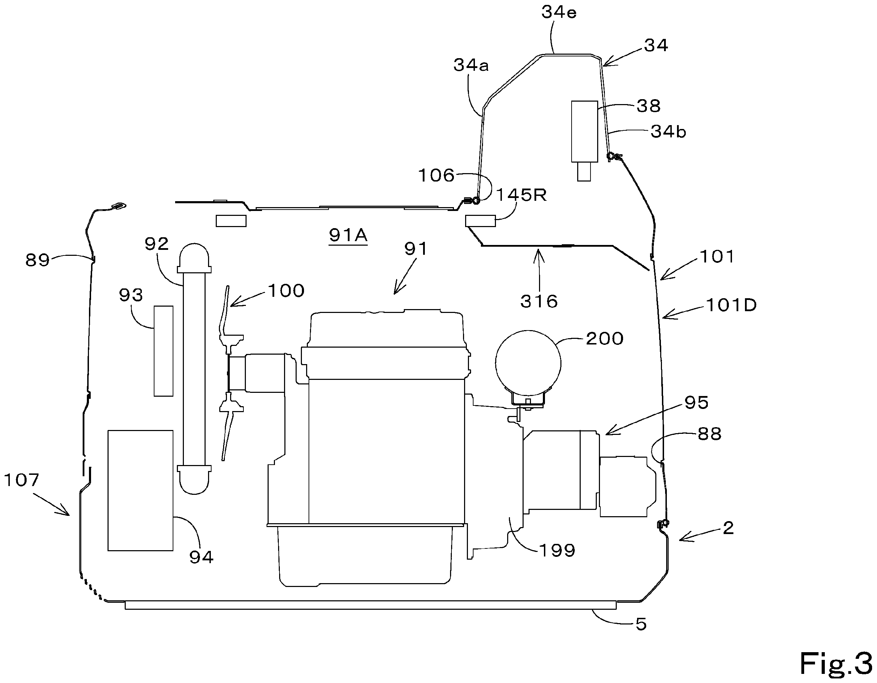

As illustrated in FIG. 3, the prime mover 91 is disposed in the rear portion of the machine body 2 in an intermediate portion in the width direction. A cooling fan 100 is attached to one side (left portion) of the prime mover 91 in the machine body width direction. The cooling fan 100 is driven by the prime mover 91. In the present embodiment, the cooling fan 100 generates cooling air that flows from one side toward the other side (from left toward right) in the machine body width direction.

A radiator 92, an oil cooler 93, and a battery 94 are disposed upstream (on the left of the prime mover 91) of the cooling fan 100 in the cooling air flowing direction (the direction in which the cooling air flows). The radiator 92 is a cooler that cools a coolant for cooling the prime mover 91. The oil cooler 93 is a cooler that cools a return hydraulic fluid returning from a hydraulic actuator such as a hydraulic cylinder or a hydraulic motor. The battery 94 is a battery that supplies electric power to an electric component provided in the working machine 1.

As illustrated in FIG. 3, a flywheel housing 199 in which a flywheel is contained is attached to the other side (right portion) of the prime mover 91 in the machine body width direction. A hydraulic pump 95 is mounted on the flywheel housing 199. The hydraulic pump 95 is driven by power of the prime mover 91 and delivers hydraulic fluid (hydraulic oil) that drives a hydraulic actuator such as a hydraulic motor or a hydraulic cylinder provided in the working machine 1. The hydraulic pump 95 delivers a pilot pressure for activating a hydraulic valve or a hydraulic oil for a signal. A muffler 200 to which exhaust gas from the prime mover 91 is guided is disposed above the flywheel housing 199.

As illustrated in FIG. 3, the cooling fan 100, the radiator 92, the oil cooler 93, the battery 94, the flywheel housing 199, the hydraulic pump 95, and the muffler 200 are disposed inside a prime mover room 91A in which the prime mover 91 is contained.

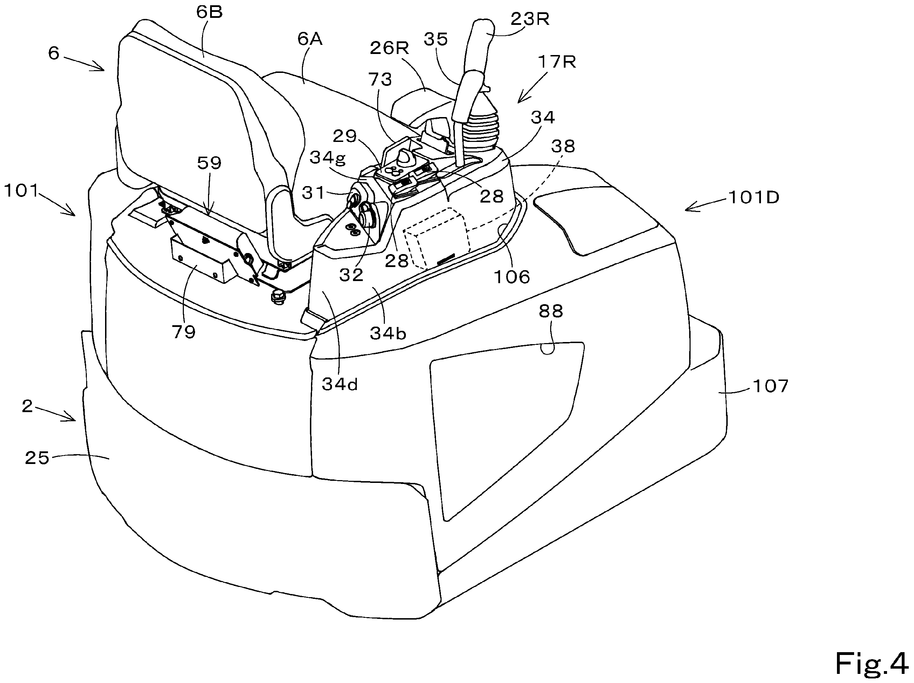

The prime mover room 91A includes the swivel board 5, the weight 25, a machine body cover 107, a partitioning wall 150 (see FIG. 6), and a hood 101 (see FIG. 4).

The cooling fan 100 sucks outdoor air into the prime mover room 91A through an outdoor air inlet 89 of the hood 101. The outdoor air (cooling air) taken into the prime mover room 91A is discharged through a discharge port 88 or the like after cooling the oil cooler 93, the radiator 92, and the prime mover 91.

As illustrated in FIGS. 1 and 2, a driving unit 18 including the operator's seat 6, a traveling lever 16 disposed in front of the operator's seat 6, and a console 17L disposed on the left of the operator's seat 6 and a console 17R disposed on the right of the operator's seat 6 is mounted on the machine body 2. The traveling lever 16 is an operation member for operating the traveling device 3. The consoles 17L and 17R are structures in which various functions are concentrated.

As illustrated in FIG. 2, the left console 17L includes a control lever 23L, a remote control valve (not illustrated), a console cover 22, an arm rest 26L, an operation lock lever (unload lever) 30, and a frame mechanism that supports the remote control valve, the console cover 22, the arm rest 26L, and the operation lock lever 30.

The control lever 23L is disposed in an upper front portion of the console 17L and can be swung forward, rearward, leftward, and rightward. The remote control valve is a pilot valve operated by the control lever 23L and is disposed below the control lever 23L.

The console cover 22 is a member that covers members such as the remote control valve and the frame mechanism. The arm rest 26L is a member on which the operator places, for example, his or her elbow and is disposed behind the control lever 23L. The operation lock lever 30 is a lever that switches a hydraulic actuator provided in the working machine 1 between an operable state and an inoperable state.

As illustrated in FIG. 6, the right console 17R is attached to a support frame 142 standing on the machine body 2. The support frame 142 stands on a swivel frame 14 that defines a framework of the machine body 2. Note that the console 17R may be directly attached to a member that defines the machine body 2. That is, the console 17R (a console bracket 33, which will be described later) is directly or indirectly attached to the machine body 2.

As illustrated in FIG. 6, the swivel frame 14 includes the swivel board 5, a pair of left and right vertical ribs 224L and 224R fixed on the swivel board 5, and the partitioning wall 150. The pair of vertical ribs 224L and 224R extend rearward from the support bracket 9 fixed to a front portion of the swivel board 5. The partitioning wall 150 is disposed at intermediate portions of the pair of vertical ribs 224L and 224R in the front-rear direction and extends from one of the vertical ribs 224L and 224R to the other one of the vertical ribs 224L and 224R.

A rear portion of the left vertical rib 224L is connected to a first bracket member 151L with a connection plate 225 interposed therebetween. A rear portion of the right vertical ribs 224R is connected to a second bracket member 151R. The first bracket member 151L and the second bracket member 151R are constituent elements that define the swivel frame 14 (the machine body 2) together with the swivel board 5.

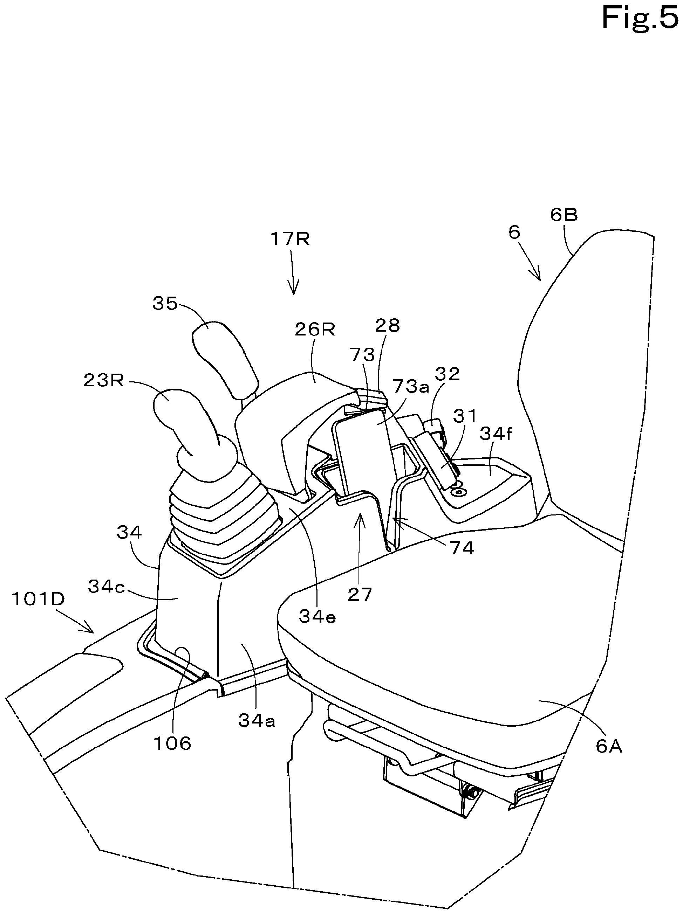

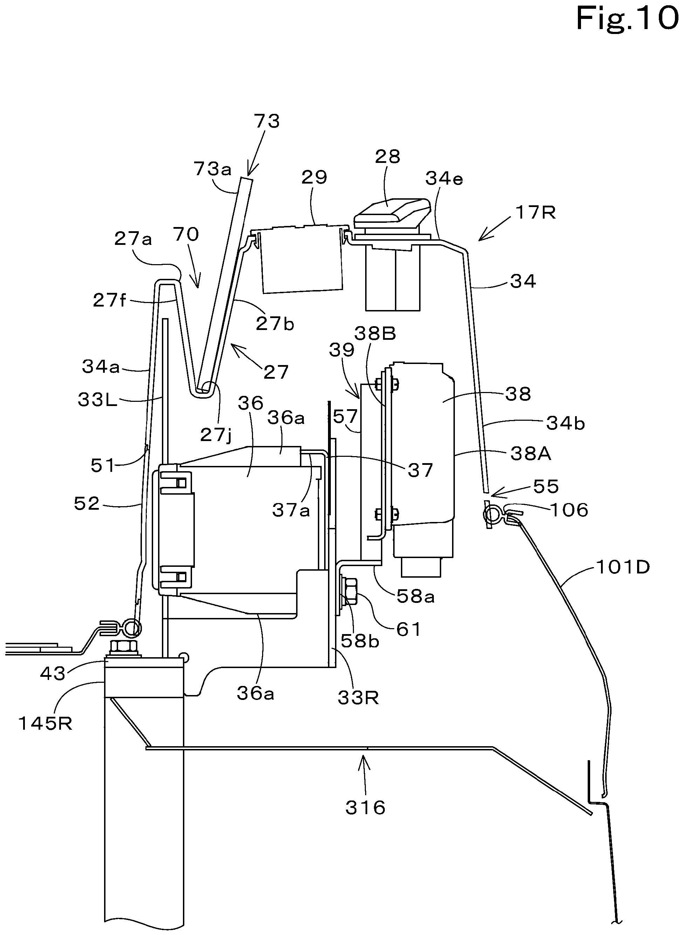

As illustrated in FIGS. 2, 4, 5, 6, and 7, the right console 17R includes a control lever 23R, a remote control valve 40, an arm rest 26R, a dozer lever 35, a console cover 34, a console bracket 33, a communication device 38, a device bracket 39, an electric component 36 (see FIG. 10), a mounting stay 37, a mobile terminal holder 27, a pair of switches 28, an accelerator operator 29, a starter 31, and a socket 32.

The control lever 23R is disposed in an upper front portion of the console 17R and can be swung forward, rearward, leftward, and rightward. The remote control valve 40 is a pilot valve operated by the control lever 23R and is disposed below the control lever 23R.

The control lever 23L and the control lever 23R are described below. By swinging the control levers 23L and 23R, members such as the working device 4 and the machine body 2 are operated. Specifically, the control levers 23L and 23R performs, for example, operation such as operation of swinging the boom 11, operation of swinging the arm 12, operation for a shoveling action and a dumping action of the bucket 13, and operation of swiveling the machine body 2. Specifically, the control lever 23L operates, for example, a bucket control valve that controls a bucket cylinder C4 for driving the bucket 13 and a swiveling control valve that controls a swivel motor for swiveling the machine body 2. The control lever 23R operates, for example, a boom control valve that controls a boom cylinder C2 for driving the boom 11 and an arm control valve that controls an arm cylinder C3 for driving the arm 12.

The arm rest 26R is a member on which the operator places, for example, his or her elbow or wrist. The arm rest 26R is disposed behind the control lever 23R. The dozer lever 35 is a lever for operating the dozer device 7. The dozer device 7 is operated by swinging the dozer lever 35 forward and rearward. The dozer lever 35 is disposed outward (on the right) of the arm rest 26R in the machine body width direction.

The console cover 34 is a molded resin. The console cover 34 covers members such as the console bracket 33, the remote control valve 40, the electric component 36, the mounting stay 37, the communication device 38, and the device bracket 39.

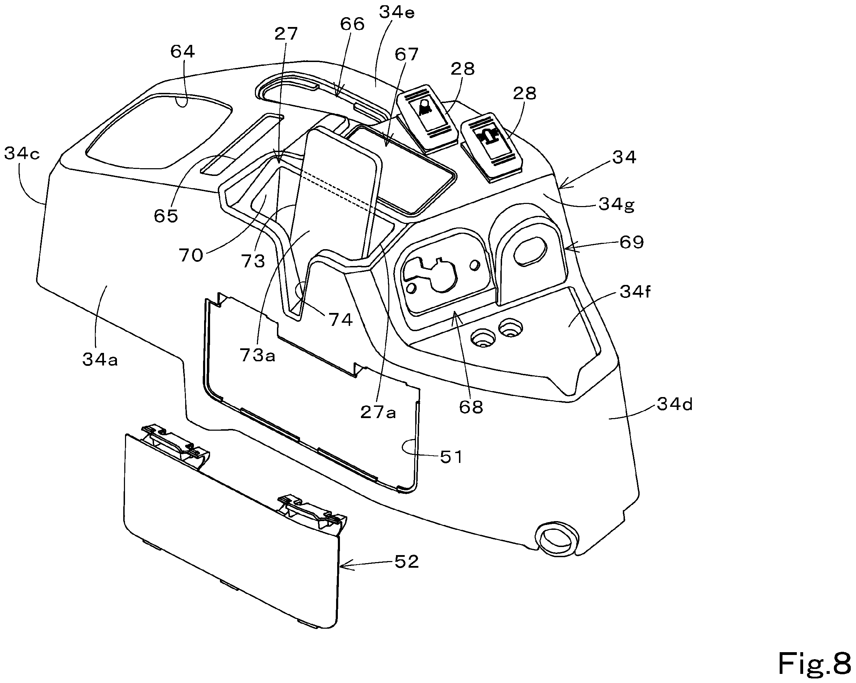

As illustrated in FIGS. 8, 9, 10, and 11, the console cover 34 includes a first side wall portion 34a, a second side wall portion 34b, a front wall portion 34c, a rear wall portion 34d, and an upper wall portion 34e, and an inner portion surrounded by the first side wall portion 34a, the second side wall portion 34b, the front wall portion 34c, the rear wall portion 34d, and the upper wall portion 34e is hollow. A lower surface of the console cover 34 is opened. That is, the console cover 34 is opened on a lower side.

As illustrated in FIGS. 3 and 4, a cover body 101D disposed in a right portion of the machine body 2 and defines a portion of the hood 101 includes, in intermediate and rear portions of the upper surface in the front-rear direction, a cutout portion 106 cut out in a range from the intermediate portion to the rear portion. The console cover 34 is disposed above the cutout portion 106. Accordingly, a lower surface side of the console cover 34 is communicated with an inside (the prime mover room 91A) of the cover body 101D.

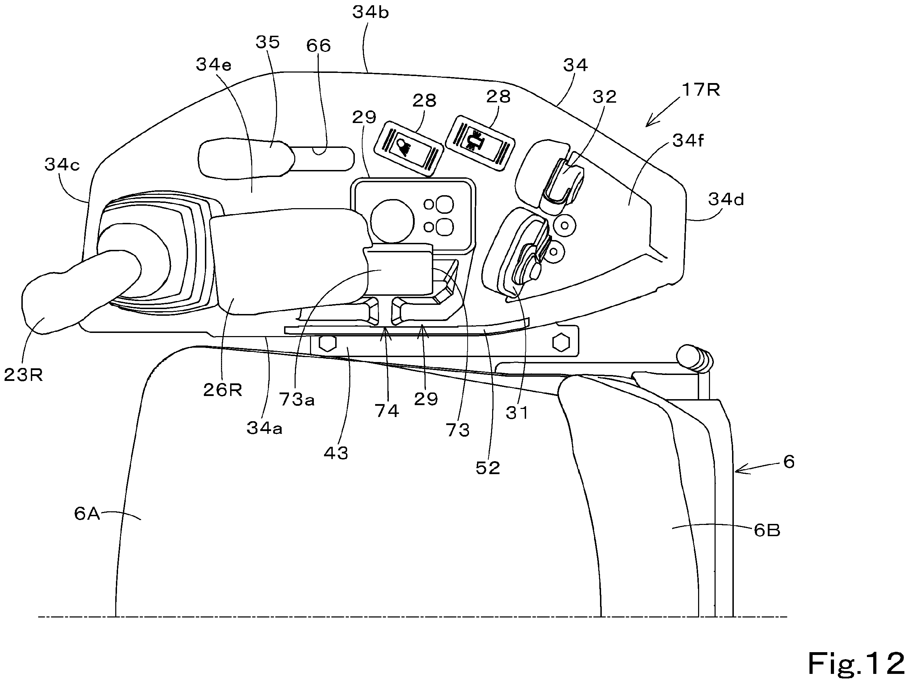

As illustrated in FIG. 12, the first side wall portion 34a is located beside (on the right of) the operator's seat 6 in the machine body width direction. As illustrated in FIGS. 8 and 10, the first side wall portion 34a includes an opening 51 formed at an intermediate position in the front-rear direction and a lid 52 that blocks the opening 51 in an openable and closable manner.

As illustrated in FIG. 10, the second side wall portion 34b is provided beside (on the right of) the first side wall portion 34a in the machine body width direction with a gap interposed therebetween. In other words, as illustrated in FIG. 12, the second side wall portion 34b is provided beside the first side wall portion 34a with a gap interposed therebetween on a side opposite to the operator's seat 6.

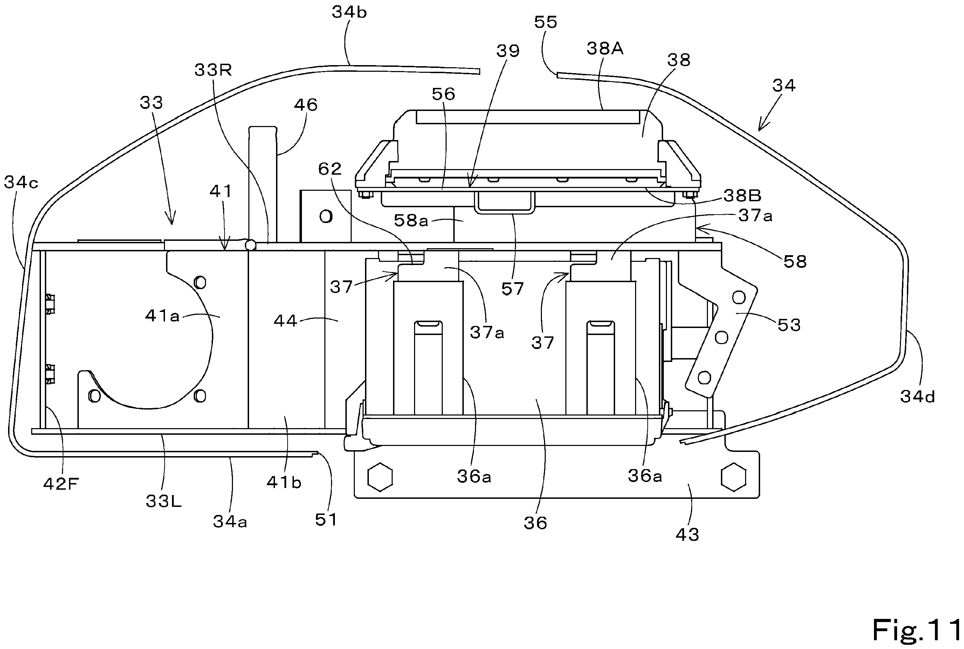

As illustrated in FIG. 11, the front wall portion 34c couples a front portion of the first side wall portion 34a and a front portion of the second side wall portion 34b. The rear wall portion 34d couples a rear portion of the first side wall portion 34a and a rear portion of the second side wall portion 34b. As illustrated in FIGS. 8, 9, and 10, the upper wall portion 34e defines an upper portion of the console cover 34. A rear portion 34f of the upper wall portion 34e is located one-level lower than an intermediate portion and a front portion thereof in the front-rear direction. The rear portion of the upper wall portion 34e can be, for example, used as a tray on which a little item is placed.

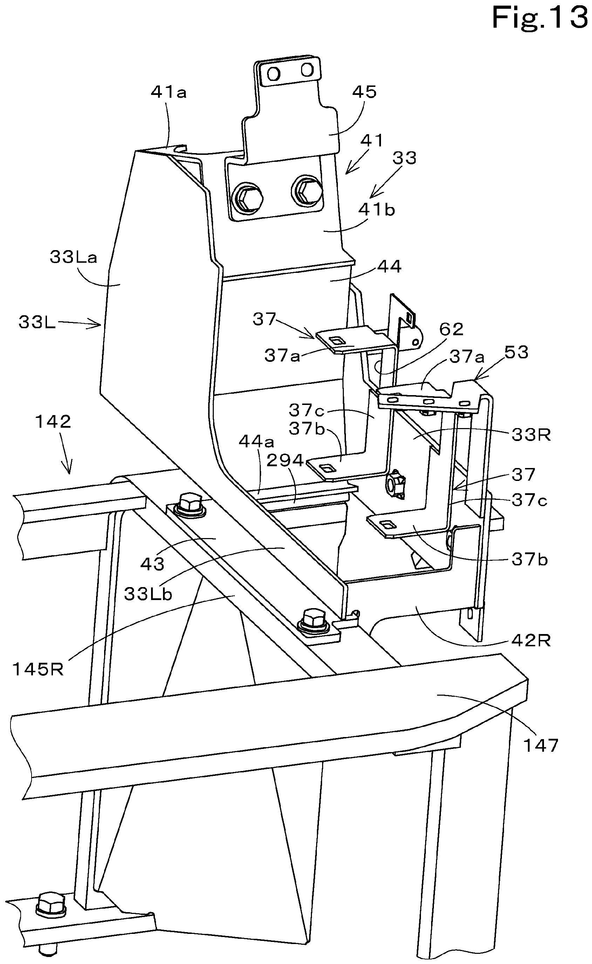

As illustrated in FIGS. 13, 14, and 15, the console bracket 33 includes a first side plate 33L, a second side plate (support plate) 33R, a mount 41, a front coupling plate 42F, a rear coupling plate 42R, an intermediate plate 44, and an attachment plate 43. The first side plate 33L is disposed outward (rightward) of the operator's seat 6 in the machine body width direction. The first side plate 33L is configured such that a front portion 33La thereof is elongated in the up-down direction and a rear portion 33Lb thereof extends rearward from a lower portion of the front portion 33La. The first side plate 33L and the second side plate 33R are disposed apart from each other in the machine body width direction. Specifically, the second side plate 33R is disposed outward (rightward) of the first side plate 33L in the machine body width direction.

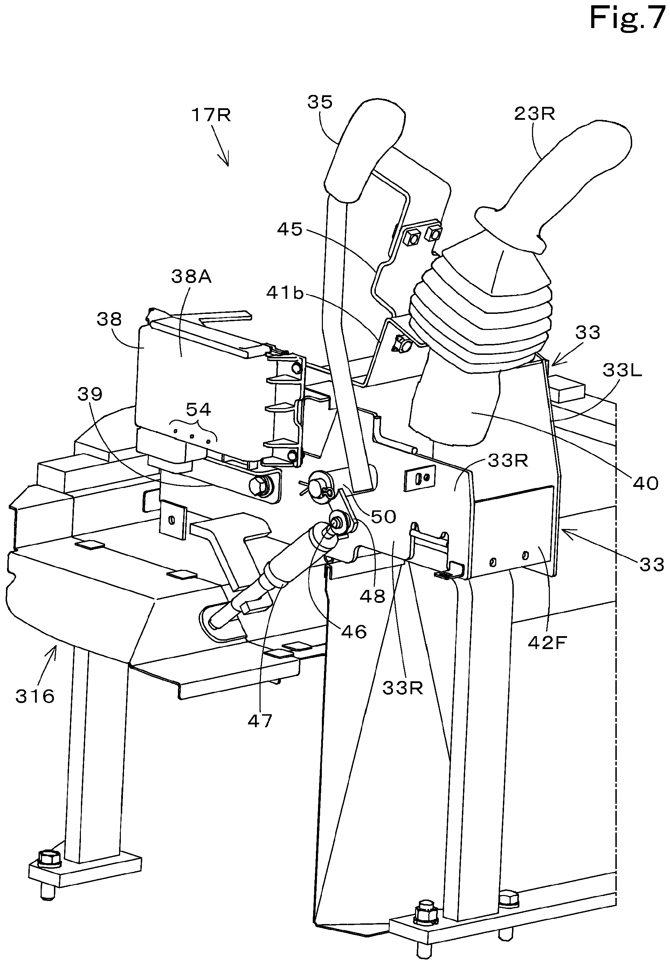

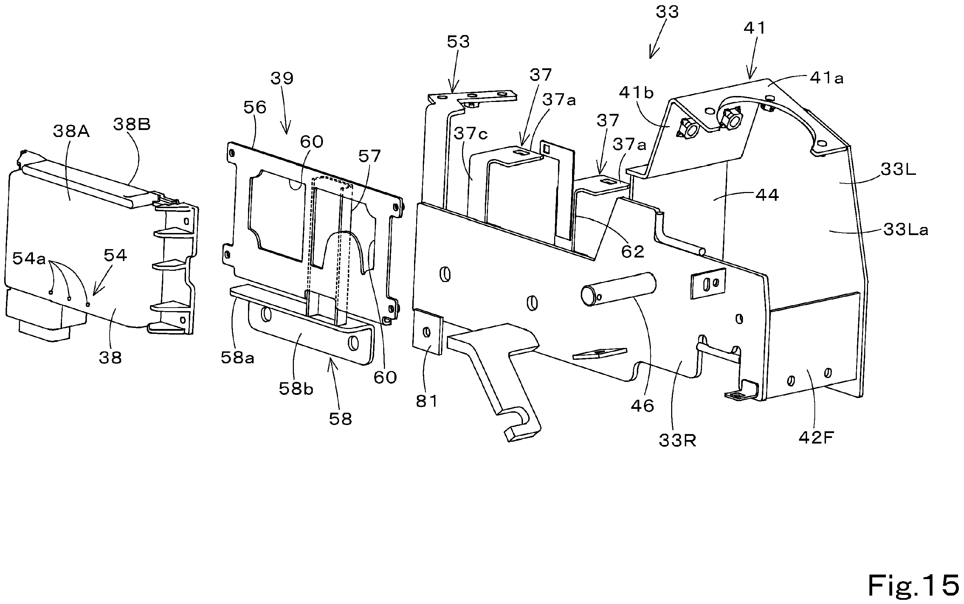

As illustrated in FIG. 15, a support shaft 46 that protrudes rightward is provided on a front portion of the second side plate 33R. As illustrated in FIG. 7, a support cylinder 50 provided at a lower end of the dozer lever 35 is supported on the support shaft 46 so as to be rotatable about an axis extending in the machine body width direction. One end of an operation cable 47 is coupled to an arm 48 fixed to the support cylinder 50. The other end of the operation cable 47 is coupled to a control valve that controls a hydraulic cylinder for driving the dozer device 7 with an interlocking mechanism interposed therebetween.

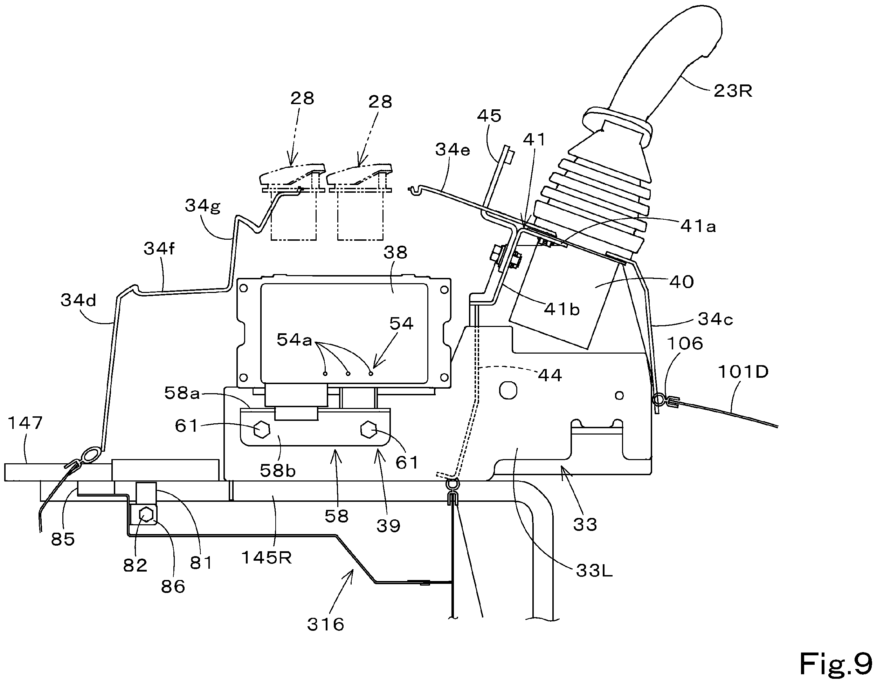

As illustrated in FIGS. 13, 14, and 15, the mount 41 is disposed on the right of an upper front portion of the first side plate 33L and is fixed on a left surface of the first side plate 33L. Furthermore, the mount 41 is disposed higher than the front portion of the second side plate 33R. The mount 41 includes an upper wall 41a and a rear wall 41b. As illustrated in FIG. 9, an upper portion of the remote control valve 40 is attached to the upper wall 41a of the mount 41. The mounting stay 45 for mounting the arm rest 26R is fixed to a back surface of the rear wall 41b with a bolt.

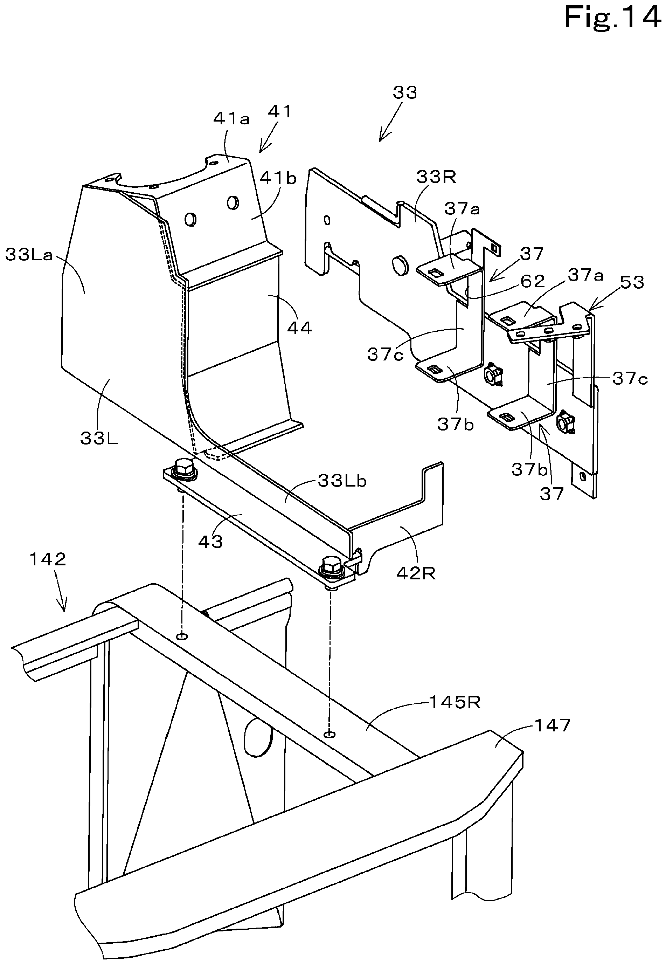

As illustrated in FIGS. 9 and 14, the intermediate plate 44 is disposed below the rear wall 41b of the mount 41, and an upper portion thereof is fixed to a lower end of the rear wall 41b. The intermediate plate 44 is disposed between a rear end of the front portion of the first side plate 33L and the second side plate 33R and couples the first side plate 33L and the second side plate 33R. A seal contact portion 44a is provided on a lower end portion of the intermediate plate 44.

As illustrated in FIG. 15, the front coupling plate 42F is disposed between a lower portion of the front portion of the first side plate 33L and the front portion of the second side plate 33R and couples the first side plate 33L and the second side plate 33R. As illustrated in FIG. 13, the rear coupling plate 42R is disposed between the rear portion of the first side plate 33L and the rear portion of the second side plate 33R and couples the first side plate 33L and the second side plate 33R. The attachment plate 43 is made of a plate member that is long in the front-rear direction, and is disposed below the first side plate 33L so that a plate surface thereof faces the up-down direction, and a right portion thereof is fixed to a lower end of the first side plate 33L.

As illustrated in FIGS. 6 and 13, the attachment plate 43 is superimposed on an upper surface of an upper side frame portion 145R provided on an upper right portion of the support frame 142 and is attached to the upper side frame portion 145R with a bolt or the like. That is, the console bracket 33 is attached to the support frame 142 and is attached to the machine body 2 with the support frame 142 interposed therebetween. Note that the console bracket 33 may be attached to a member that defines the machine body 2. That is, the console bracket 33 is directly or indirectly attached to the machine body 2.

As illustrated in FIGS. 9, 10, and 11, the console bracket 33 is covered with the console cover 34. Specifically, a left side of the console bracket 33 is covered with the first side wall portion 34a of the console cover 34, a right side of the console bracket 33 is covered with the second side wall portion 34b, a front side of the console bracket 33 is covered with the front wall portion 34c, a rear side of the console bracket 33 is covered with the rear wall portion 34d, and an upper side of the console bracket 33 is covered with the upper wall portion 34e.

The console cover 34 is attached to the console bracket 33 with a screw or the like. Specifically, the rear portion 34f of the upper wall portion 34e of the console cover 34 is attached to a mounting stay 53 (see FIG. 13) provided in the rear portion of the console bracket 33, and the front wall portion 34c of the console cover 34 is attached to the front coupling plate 42F of the console bracket 33.

The communication device 38 is a direct communication unit (DCU) that performs data communication with an external device (not illustrated). The communication device 38 receives data from an information processing unit (IPU) (information collecting unit) 59, which is an information processing device that will be described later. Furthermore, the communication device 38 transmits data such as data received from the IPU 59 or positional information to a server. The server is, for example, a server installed at a manufacturer (manufacturing company) that manufactures the working machine 1 or a server installed at a dealer (sales and maintenance company) that does sales and maintenance of the working machine 1.

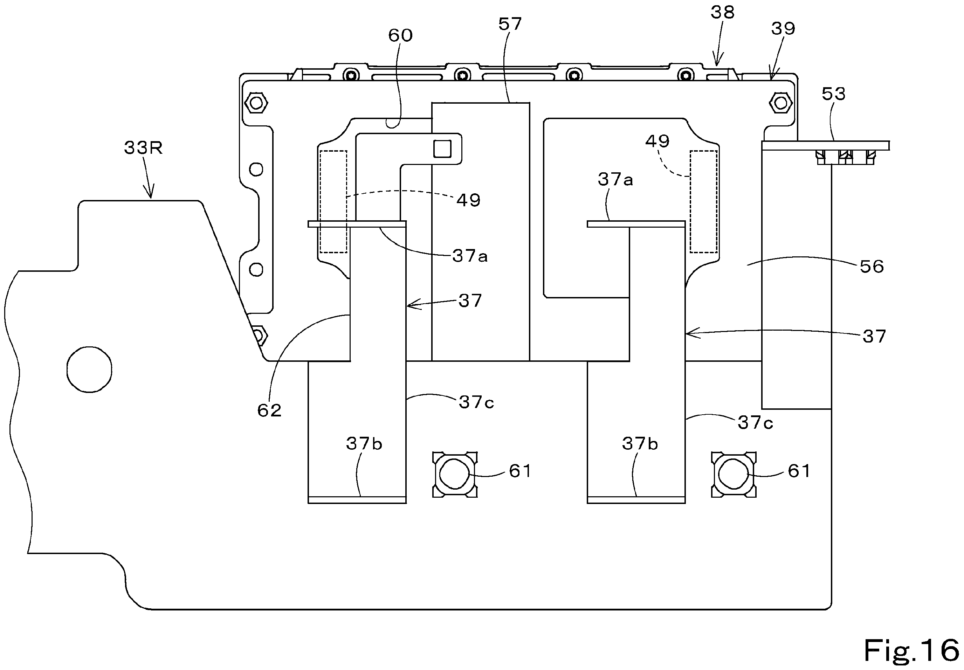

The communication device 38 is a waterproof device configured such that members such as an electronic substrate, a communication antenna 49 (see FIG. 16), and a positioning antenna (GPS antenna) are stored in a case made of a resin. The communication antenna 49 and the positioning antenna are attached to the electronic substrate. The communication antenna 49 is, for example, a Long Term Evolution antenna (LTE antenna). The communication antenna 49 is an antenna for communication with the server.

Since the communication antenna 49 is included in the communication device 38, the communication device 38 can maintain a communicable state during an illegal act (e.g., an act of removing the communication device 38) such as theft and can report the act to a predetermined destination.

The positioning antenna receives a satellite signal transmitted from a positioning satellite. The working machine 1 detects a position thereof (measured position information including latitude and longitude) by a positioning system on the basis of the satellite signal received by the positioning antenna. Specifically, the working machine 1 finds a position and an orientation of the working machine 1 by using a known Global Positioning System (GPS) (for example, by RTK-GPS suitable for measurement of a position of a mobile body), which is an example of a Global Navigation Satellite System (GNSS). That is, the working machine 1 communicates with a base station (reference station) installed at a known position, and the base station transmits, to the working machine 1, measured position data (correction information) obtained by receiving a radio wave from the positioning satellite. The working machine 1 detects a position thereof (latitude and longitude) on the basis of the measured position data obtained by receiving a radio wave from the positioning satellite and the measured position data obtained from the base station. The communication device 38 transmits and receives positional information.

As illustrated in FIGS. 7, 9, 10, 11, and 15, the device bracket 39 is a bracket to which the communication device 38 is attached. The communication device 38 is attached to the console bracket 33 with the device bracket 39 interposed therebetween. The device bracket 39 and the communication device 38 are disposed inside the console cover 22. That is, the communication device 38 is disposed inside the console 17R. By disposing the communication device 38 inside the console 17R, theft of the communication device 38 can be prevented or reduced. In addition, outer appearance of the working machine 1 can be improved. Furthermore, disposing the communication device 38 inside the console 17R makes it unnecessary to provide a cover exclusive for the communication device 38.

As illustrated in FIGS. 7, 9, 10, 11, and 15, the communication device 38 is disposed on the right (on a side opposite to the operator's seat 6) of a rear portion of the console bracket 33. Specifically, the communication device 38 is disposed on the right of the rear portion of the second side plate (support plate) 33R. The communication device 38 is located at an intermediate portion of the console cover 34 (the console 17R) in the front-rear direction (see FIG. 9).

As illustrated in FIG. 3, the communication device 38 is disposed above the hydraulic pump 95 and the muffler 200.

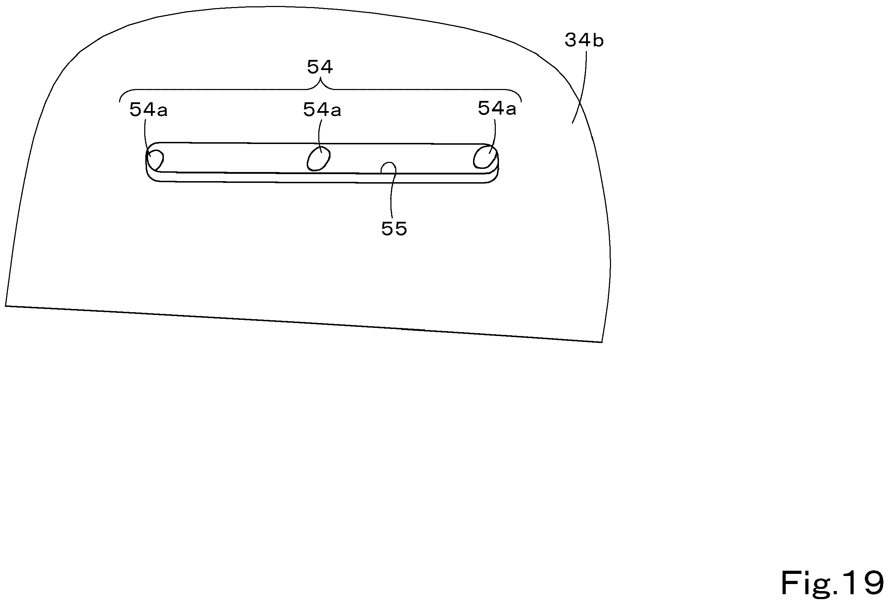

As illustrated in FIGS. 10 and 11, the communication device 38 is disposed between the first side wall portion 34a and the second side wall portion 34b so as to be located closer to the second side wall portion 34b. The communication device 38 is disposed so that a device front surface 38A thereof faces outward in the machine body width direction and faces the second side wall portion 34b. As illustrated in FIG. 15, the communication device 38 includes an indicator 54. The indicator 54 is provided on an intermediate portion, in the front-rear direction, of a lower portion of the device front surface 38A of the communication device 38. The indicator 54 displays, for example, an operating state (communication state) of the communication device 38. The indicator 54 includes three indicator lamps 54a. As illustrated in FIGS. 10, 11, and 19, the second side wall portion 34b includes a view hole 55 through which the indicator 54 is viewable from an outside of the console 17R.

The indicator 54 can be easily checked from a position outward of the working machine 1 in the machine body width direction by disposing the communication device 38 including the indicator 54 on the device front surface 38A so that the device front surface 38A faces outward in the machine body width direction and faces the second side wall portion 34b and forming the view hole 55 in the second side wall portion 34b.

As illustrated in FIGS. 10 and 11, the second side plate (support plate) 33R of the console bracket 33 is disposed between the first side wall portion 34a and the communication device 38. The device bracket 39 is disposed between the second side plate 33R and the communication device 38 and is attached to the second side plate 33R. The communication device 38 can be thus disposed between the first side wall portion 34a and the second side wall portion 34b so as to be located closer to the second side wall portion 34b. By widening the second side wall portion 34b outward in the machine body width direction to dispose the communication device 38 inside the console 17R, a space where the communication device 38 is disposed in the console 17R (the console cover 34) can be easily secured.

As illustrated in FIG. 15, the device bracket 39 includes an attachment plate 56, a vertical member 57, and a mounting stay 58. The attachment plate 56 is a metal plate member having a substantially rectangular shape in side view. The attachment plate 56 is disposed on a device back surface 38B of the communication device 38 opposite to the device front surface 38A. The communication device 38 is attached to four corners of the attachment plate 56 with a screw or the like. The attachment plate 56 includes a cutout portion 60 that passes through the attachment plate 56. As illustrated in FIG. 16, the communication antenna 49 is located at a position corresponding to the cutout portion 60 so that the attachment plate 56 does not block a radio wave.

The vertical member 57 is made of channel steel and is disposed on a left surface of the attachment plate 56 and extends in the up-down direction so that an opened side thereof faces rightward. The vertical member 57 is fixed to a left surface of the mounting stay 58 by welding or the like.

The mounting stay 58 is a plate member, and includes an upper wall 58a whose plate surface faces the up-down direction and a vertical wall 58b that extends downward from a left end of the upper wall 58a. The upper wall 58a of the mounting stay 58 is fixed to a lower end of the vertical member 57. The vertical wall 58b of the mounting stay 58 is superimposed on an intermediate portion, in the up-down direction, of a right surface of the second side plate 33R and is fixed to the second side plate 33R with a bolt 61 (see FIG. 10).

Since the device bracket 39 is attached to the second side plate 33R, the communication antenna 49 is located higher than the second side plate 33R, as illustrated in FIG. 16. That is, the device bracket 39 is attached to the second side plate 33R so that the communication antenna 49 is disposed higher than the second side plate (support plate) 33R. Since the communication antenna 49 is located higher than the second side plate 33R, the second side plate 33R does not block a radio wave.

As illustrated in FIGS. 10 and 14, the electric component 36 is disposed between the second side plate 33R and the first side wall portion 34a. In the present embodiment, the electric component 36 is a fuse box in which a fuse is attached. The electric component 36 is attached to the mounting stay 37.

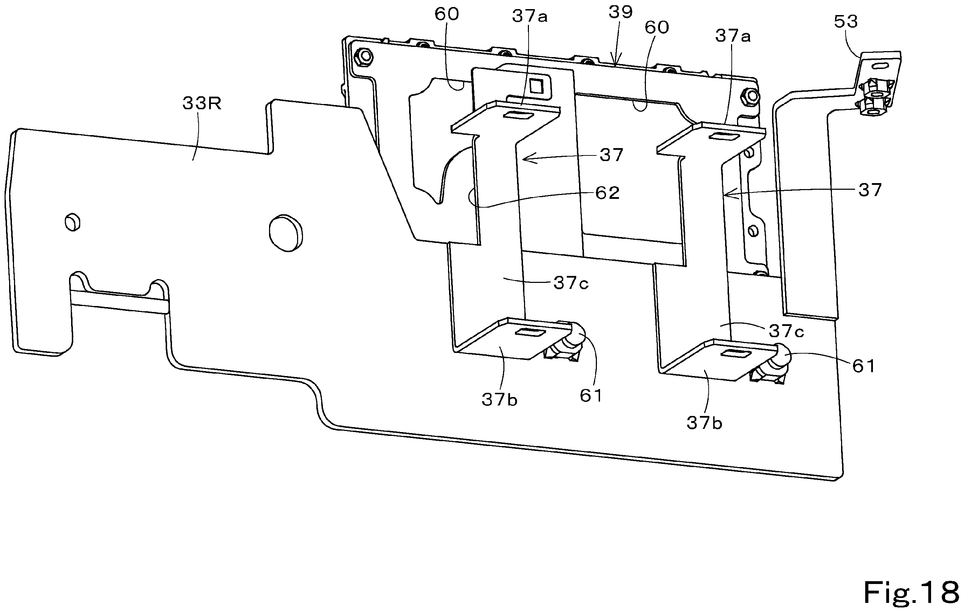

As illustrated in FIG. 18, a pair of mounting stays 37 are arranged in the front-rear direction on a left side of the rear portion of the second side plate 33R. Each of the mounting stays 37 includes an upper plate portion 37a, a lower plate portion 37b, and a vertical plate portion 37c. The lower plate portion 37b is disposed below the upper plate portion 37a with a gap interposed therebetween. The vertical plate portion 37c couples a right end of the upper plate portion 37a and a right end of the lower plate portion 37b. The vertical plate portion 37c is fixed to the second side plate 33R so that a lower portion thereof is superimposed on the left surface of the second side plate 33R. Accordingly, the mounting stay 37 is fixed to the second side plate 33R so as to protrude upward from the second side plate 33R.

As illustrated in FIG. 10, the electric component 36 includes an insertion portion 36a in an upper portion and a lower portion, and the electric component 36 is attached to the mounting stay 37 so that the upper plate portion 37a and the lower plate portion 37b are inserted into the insertion portions 36a. Note that the electric component 36 faces the opening 51 of the console cover 34, and the electric component 36 can be accessed (e.g., the fuse can be replaced) from an outside of the console cover 34 when the lid 52 is removed.

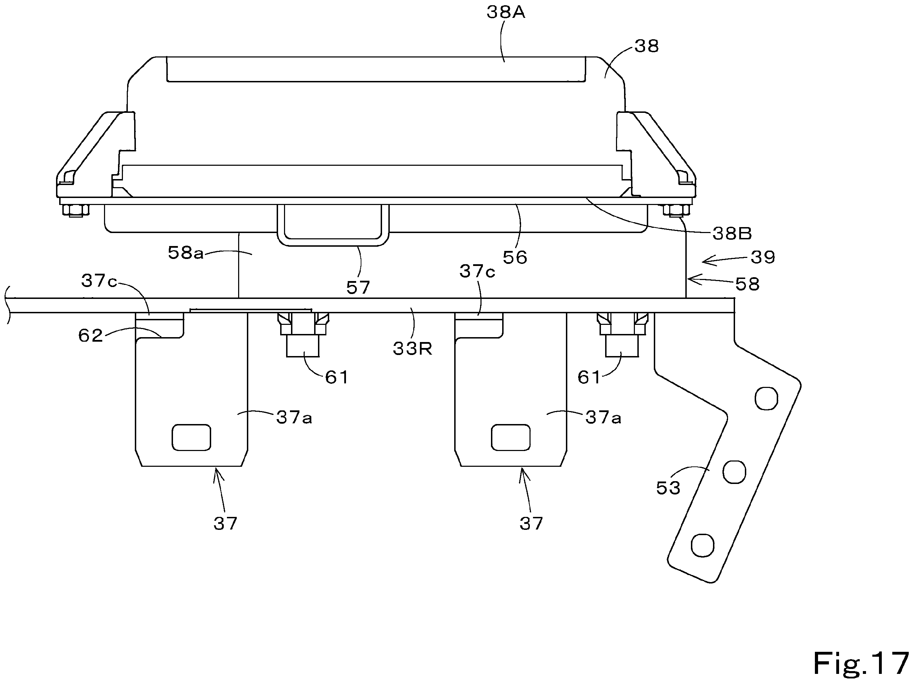

As illustrated in FIGS. 16, 17, and 18, the mounting stay 37 includes a cutout portion 62. The cutout portion 62 is provided in a range from a right front portion of the upper plate portion 37a to an upper front portion of the vertical plate portion 37c. As illustrated in FIG. 16, the cutout portion 62 is located at a position corresponding to the communication antenna 49 in the machine body width direction. That is, the mounting stay 37 includes the cutout portion 62 formed by cutting out a portion corresponding to the communication antenna 49. In the present embodiment, the front-side communication antenna 49 is located at a position corresponding to the cutout portion 62 of the front-side mounting stay 37.

In disposing the communication device 38, it is required that no object that blocks a radio wave be present within a predetermined distance from the communication antenna 49. By forming, in the mounting stay 37, the cutout portion 62 by cutting out a portion corresponding to the communication antenna 49, it is possible to prevent the mounting stay 37 from blocking a radio wave. That is, the cutout portion 62 can accomplish the requirement that no object that blocks a radio wave be present within a predetermined distance from the communication antenna 49. For example, if the cutout portion 62 is not formed in the mounting stay 37, the communication device 38 needs to be separated by a predetermined distance from the mounting stay 37. However, by forming the cutout portion 62 in the mounting stay 37, the communication device 38 can be disposed close to the mounting stay, and therefore the communication device 38 can be disposed in the console 17R in a contact manner (the second side wall portion 34b can be prevented from being widened more than necessary).

Note that in the present embodiment, no object that blocks a radio wave is present within a predetermined distance from the communication device 38 rightward, forward, rearward, upward, and downward of the communication device 38. In the present embodiment, the rear-side mounting stay 37 also has the same shape as the front-side mounting stay 37 so that the shapes of the mounting stays 37 are made uniform although only the front-side mounting stay 37 needs the cutout portion 62.

As illustrated in FIGS. 8 and 12, the mobile terminal holder 27, the pair of switches 28, the accelerator operator 29, and the socket 32 are provided on the upper portion of the console cover 34.

First, arrangement of these members is described.

As illustrated in FIGS. 8 and 12, the mobile terminal holder 27 is provided in an intermediate portion of the console cover 34 (the console 17R) in the front-rear direction so as to be located closer to the operator's seat 6 than a center of the console cover 34 in the machine body width direction. As illustrated in FIG. 12, the mobile terminal holder 27 is provided beside (on the right of) the seat portion 6A so as to be located forward of the backrest portion 6B.

As illustrated in FIG. 12, the pair of switches 28 are disposed beside the operator's seat 6 (the seat portion 6A) so as to be located forward of the backrest portion 6B. The pair of switches 28 are provided on a side opposite to the operator's seat 6 in the machine body width direction with respect to the center of the console cover 34 (the console 17R) in the machine body width direction. The pair of switches 28 are arranged in the front-rear direction. Furthermore, the pair of switches 28 are provided in an intermediate portion of the console cover 34 (the console 17R) in the front-rear direction. Furthermore, the pair of switches 28 are disposed outward of (on the right of) the mobile terminal holder 27 in the machine body width direction.

As illustrated in FIG. 12, the accelerator operator 29 is provided between the mobile terminal holder 27 and the pair of switches 28. As illustrated in FIG. 4, the starter 31 and the socket 32 are provided on a vertical surface wall 34g between the intermediate portion of the console cover 34 in the front-rear direction and the rear portion 34f. In the present embodiment, the starter 31 is provided in a left portion of the vertical surface wall 34g, and the socket 32 is provided in a right portion of the vertical surface wall 34g.

Note that in FIG. 8, reference sign 64 represents a hole for avoiding interference with an upper portion of the remote control valve 40. Reference sign 65 represents an insertion hole through which the mounting stay 45 protrudes from an inside of the console 17R. Reference sign 66 represents a guide hole through which the dozer lever 35 protrudes from an inside of the console 17R. Reference sign 67 represents an attachment hole for attaching the accelerator operator 29. Reference sign 68 represents an attachment portion for attaching the starter 31. Reference sign 69 represents an attachment portion for attaching the socket 32.

Next, the mobile terminal holder 27, the pair of switches 28, the accelerator operator 29, and the socket 32 are described in detail.

The mobile terminal holder 27 is a portion that holds a mobile terminal 73 such as a smartphone.

As illustrated in FIG. 10, the mobile terminal holder 27 is recessed from an upper side to a lower side and includes an upper end edge portion 27a that forms an upper end opening and an internal space (mobile terminal container) 70 in which the mobile terminal 73 is contained. Accordingly, the mobile terminal 73 can be inserted into the mobile terminal container 70 (the mobile terminal holder 27) from above. The mobile terminal holder 27 can hold the mobile terminal 73 so that a display screen 73a of the mobile terminal 73 faces the operator's seat 6.

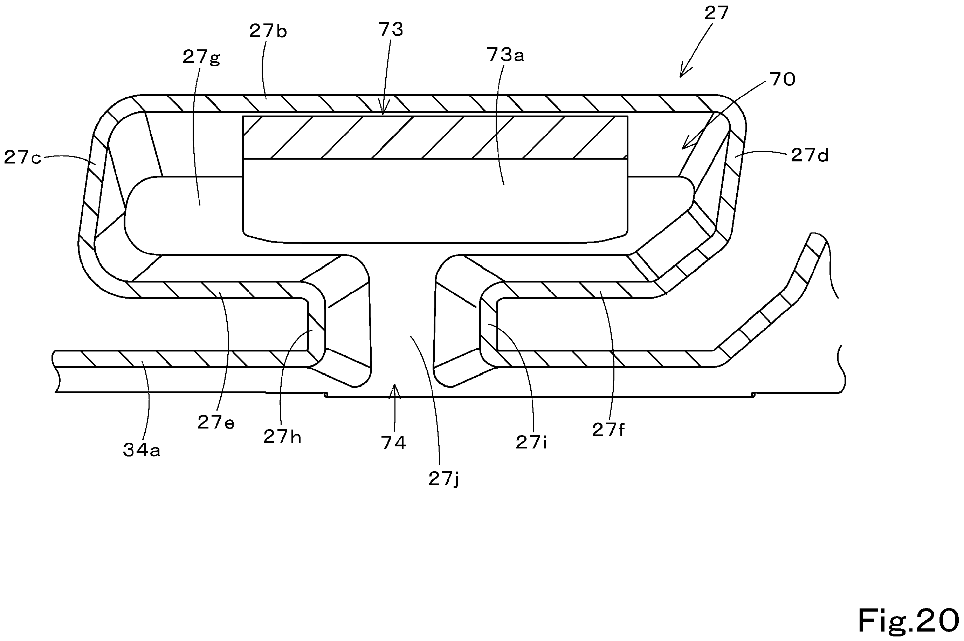

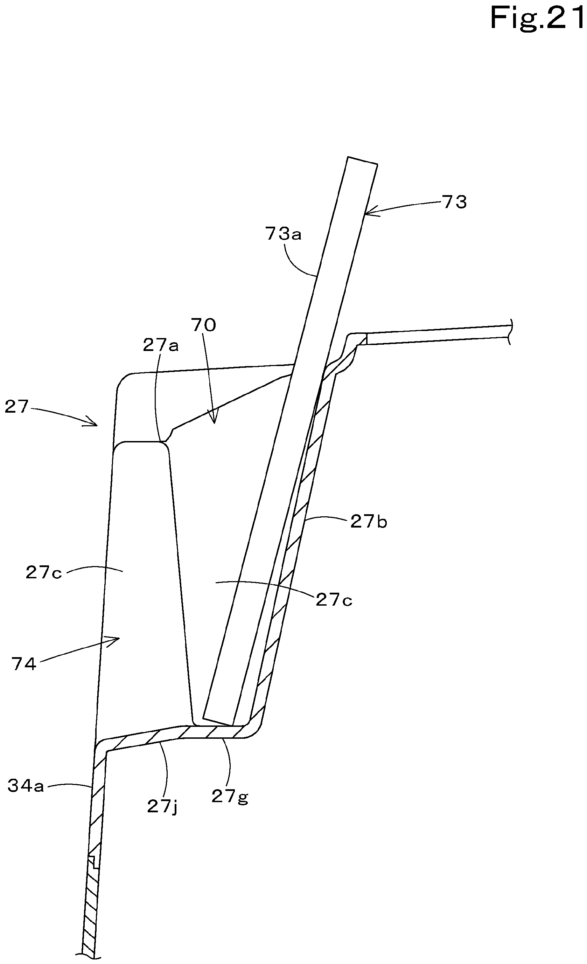

As illustrated in FIGS. 20 and 21, the internal space (the mobile terminal container) 70 of the mobile terminal holder 27 is formed by a first wall 27b, a second wall 27c, a third wall 27d, a fourth wall 27e, a fifth wall 27f, and a sixth wall 27g. As illustrated in FIG. 21, the first wall 27b is a wall portion which a surface of the mobile terminal 73 opposite to the display screen 73a faces in a state where the mobile terminal 73 is contained so that the display screen 73a of the mobile terminal 73 faces the operator's seat 6. The first wall 27b forms a right surface portion of an inner surface of the mobile terminal container 70. As illustrated in FIG. 21, the first wall 27b is inclined away from the operator's seat 6 toward an upper side. In this way, the mobile terminal 73 can be held by the mobile terminal holder 27 so that the operator sitting on the operator's seat 6 can easily view the display screen 73a of the mobile terminal 73.

As illustrated in FIG. 20, the second wall 27c is a wall portion extending leftward from a front end of the first wall 27b and forms a front surface portion of the inner surface of the mobile terminal container 70. The third wall 27d is a wall portion extending leftward from a rear end of the first wall 27b and forms a rear surface portion of the inner surface of the mobile terminal container 70. The fourth wall 27e is a wall portion extending rearward from a left end of the second wall 27c and forms a front portion of a left surface portion of the inner surface of the mobile terminal container 70. The fifth wall 27f is a wall portion extending forward from a left end of the third wall 27d and forms a rear portion of the left surface portion of the inner surface of the mobile terminal container 70. A gap is present between a rear end of the fourth wall 27e and a front end of the fifth wall 27f.

As illustrated in FIG. 21, the sixth wall 27g is a wall portion extending leftward from a lower end of the first wall 27b and defines a bottom portion that supports a lower end of the mobile terminal 73. In other words, the sixth wall 27g forma a bottom surface portion (lower surface portion) of the inner surface of the mobile terminal container 70.

As illustrated in FIGS. 20 and 21, the mobile terminal holder 27 includes a groove portion 74 on the operator's seat 6 side. The groove portion 74 is formed over a range from the upper end edge portion 27a to the bottom portion 27g and is opened from the mobile terminal container 70 (the internal space of the mobile terminal holder 27) toward the operator's seat 6. The groove portion 74 is formed by a seventh wall 27h, an eighth wall 27i, and a ninth wall 27j. As illustrated in FIG. 20, the seventh wall 27h extends leftward from the rear end of the fourth wall 27e and is connected to the first side wall portion 34a of the console cover 34. The eighth wall 27i extends leftward from the front end of the fifth wall 27f and is connected to the first side wall portion 34a of the console cover 34. As illustrated in FIG. 21, the ninth wall 27j extends leftward from a left end of the sixth wall 27g and is connected to the first side wall portion 34a of the console cover 34. The ninth wall 27j is inclined downward toward an inner side in the machine body width direction (toward the operator's seat 6).

Since the mobile terminal holder 27 includes the groove portion 74, a foreign substance such as water or dust that has entered the mobile terminal container 70 can be easily removed from the inside of the mobile terminal container 70 through the groove portion 74.

The pair of switches 28 are, for example, light switches. Specifically, one switch (front-side switch) 28F is a switch for turning ON and OFF the working lamp 7 attached to the boom 11. The other switch (rear-side switch) 28R is a switch for turning ON and OFF a revolving light 71 (see FIG. 2) provided on a roof 19 of the canopy 15. Note that the switch 28F may be a switch for turning ON and OFF a headlight 72 (see FIG. 2) provided on the roof 19 of the canopy 15. The number of switches 28 may be one or may be three or more. That is, it is only necessary that at least one switch 28 be provided.

The switches 28 are not restrictive, and can be, for example, seesaw switches (rocker switches). One of operation of turning ON and operation of turning OFF is performed by pressing a front end, and the other one of the operation of turning ON and the operation of turning OFF is performed by pressing a rear end.

As illustrated in FIG. 12, each of the switches 28 has a rectangular shape in plan view, and is inclined away from the operator's seat 6 (outward in the machine body width direction) toward a front side in plan view.

As illustrated in FIGS. 8 and 10, the pair of switches 28 are provided at a position corresponding to a position above the communication device 38.

Since the switches 28 are inclined away from the operator's seat 6 toward the front side in plan view, the operator can press the switches 28 without increasing an angle by which his or her arm is opened or twisting his or her wrist. In other words, the operator can press the switches in a natural manner.

Furthermore, since the switches 28 are provided on a side opposite to the operator's seat 6 in the machine body width direction with respect to the center of the console 17R in the machine body width direction, the operator can operate the switches 28 while keeping an arm away from his or her side by an appropriate distance, and therefore operability of the switch 28 is good. Furthermore, since the switches 28 are provided at a position corresponding to a position above the communication device 38, a place where the switches 28 are installed can be secured.

The accelerator operator 29 decides a rotational speed of the prime mover 91 by operating a rotational speed adjuster (governor) for setting the rotational speed of the prime mover 91. Specifically, the accelerator operator 29 includes an accelerator dial 29A manually operated by the operator. The accelerator dial 29A is, for example, connected to a controller. The controller acquires a rotational speed indicated by the accelerator dial 29A, and outputs a command signal to the rotational speed adjuster so that the rotational speed of the prime mover 91 matches the rotational speed indicated by the accelerator dial 29A.

The starter 31 is a device for starting an engine. The socket 32 is a USB socket, a cigar socket, or the like.

As illustrated in FIG. 4, the IPU 59 is disposed behind a lower portion of the operator's seat 6. The IPU 59 is an "information processing device" that temporarily accumulates information concerning the working machine 1 and performs predetermined processing (e.g., compression processing). The IPU 59 is connected to a communication port of an on-board communication network (not illustrated), a communication port of an On-Board Diagnostics (OBD), or the like by a harness. The on-board communication network is a Controller Area Network (CAN), a FlexRay, or the like mounted on the working machine 1. The IPU 59 receives information concerning the working machine 1 from the communication network or the On-Board Diagnostics. The IPU 59 is connected to the communication device 38 by a harness 64, and transmits data to the communication device 38. The IPU 59 and the communication device 38 are connected to a power supply port (not illustrated) by a harness, and is supplied with power from the power supply port.

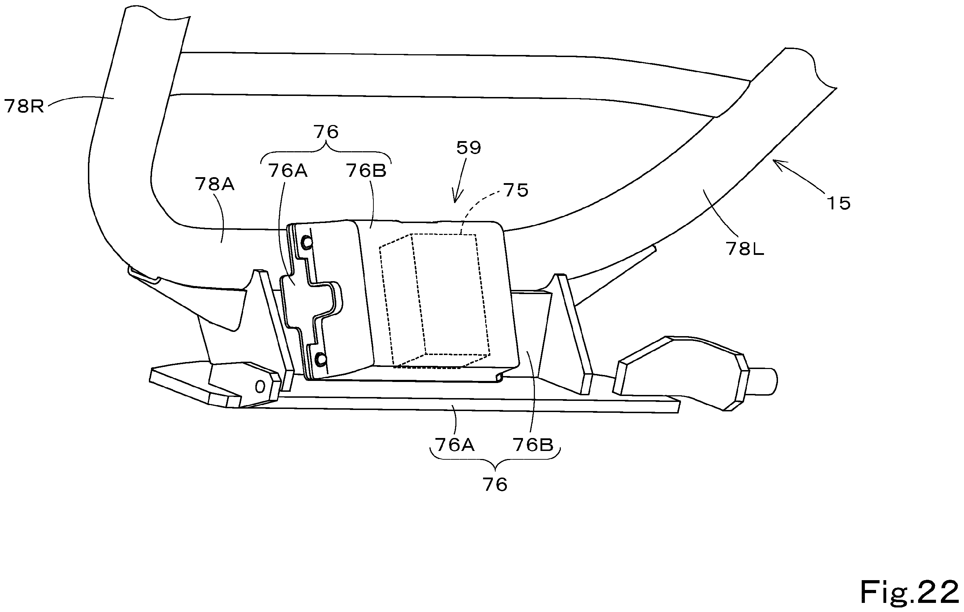

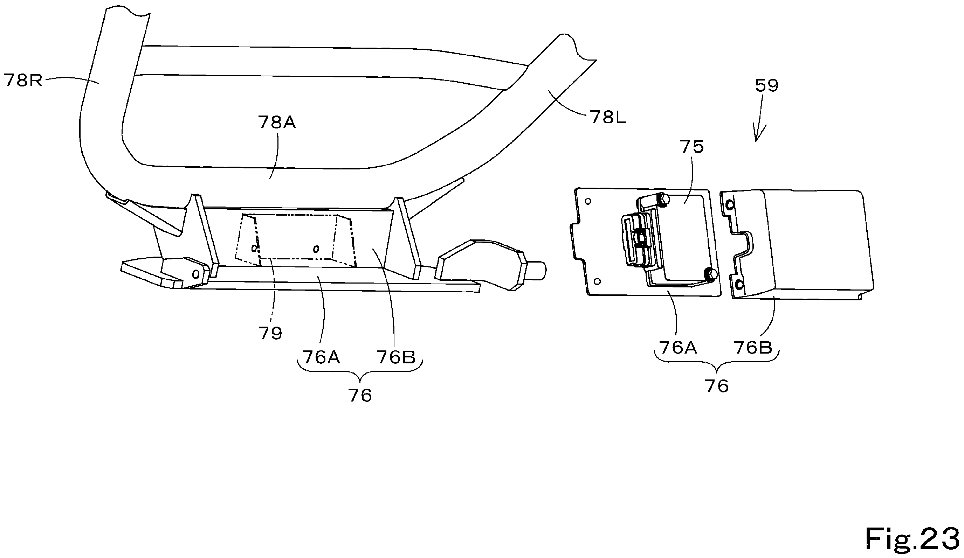

As illustrated in FIGS. 22 and 23, the IPU 59 includes an IPU body 75 and a case body 76 in which the IPU body 75 is contained. The case body 76 includes an attachment plate 76A to which the IPU body 75 is attached and a cover body 76B attached to the attachment plate 76A so as to cover the IPU body 75.

The IPU 59 is attached to an attachment portion 77 of the ROPS 15. The attachment portion 77 includes a base member 77A and a coupler 77B. The base member 77A is attached to a rear upper frame 147 (see FIG. 6) provided in a rear portion of an upper portion of the support frame 142. The coupler 77B couples a connector 78A of the ROPS 15 and the base member 77A. The connector 78A of the ROPS 15 is a portion that connects a lower end portion of a left rear pillar portion 78L and a lower end portion of a right rear pillar portion 78R of the ROPS 15. A bracket member 79 is fixed to a rear surface of the case body 76 (see FIG. 4), and the IPU59 is attached to the ROPS 15 by attaching the bracket member 79 to the coupler 77B.

As illustrated in FIGS. 3 and 10, the working machine 1 includes a heat blocker 316 that blocks heat from the prime mover 91 side (e.g., the prime mover 91, the muffler 200, and the hydraulic pump 95) so that the heat does not transmit to the communication device 38. The heat blocker 316 covers the communication device 38 from below and blocks heat such as cooling air (hot air), convection heat, or radiation heat from the prime mover 91 side so that the heat does not transmit to the communication device 38.

An example embodiment of the present invention provides the working machine 1 described in the following items.

(Item 1) A working machine 1 comprising: a machine body 2; an operator's seat 6 mounted on the machine body 2; a console 17R disposed beside the operator's seat 6; and a communication device 38 disposed inside the console 17R.

With the working machine 1 according to Item 1, theft of the communication device 38 can be prevented or reduced by disposing the communication device 38 inside the console 17R. In addition, outer appearance of the working machine 1 can be improved.

(Item 2) The working machine according to Item 1, wherein the console 17R includes a first side wall portion 34a located beside the operator's seat 6 and a second side wall portion 34b provided beside the first side wall portion 34a with a gap interposed therebetween on a side opposite to the operator's seat 6, and the communication device 38 is disposed between the first side wall portion 34a and the second side wall portion 34b so as to be located closer to the second side wall portion 34b.

With the working machine 1 according to Item 2, in disposing the communication device 38 inside the console 17R, a space where the communication device is disposed in the console 17R can be easily secured by widening the second side wall portion 34b outward in the machine body width direction.

(Item 3) The working machine according to Item 2, wherein the communication device 38 includes an indicator 54 provided on a side facing the second side wall portion 34b, and the second side wall portion 34b includes a view hole 55 through which the indicator 54 is viewable from an outside of the console 17R.

With the working machine 1 according to Item 3, the indicator 54 can be checked from an outside of the working machine 1 in the machine body width direction.

(Item 4) The working machine according to Item 2 or 3, further comprising a device bracket 39 to which the communication device 38 is attached, wherein the console 17R includes a console bracket 33 directly or indirectly attached to the machine body 2, the console bracket 33 includes a support plate 33R disposed between the first side wall portion 34a and the communication device 38, and the device bracket 39 is disposed between the support plate (33R) and the communication device 38 and is attached to the support plate 33R.

With the working machine 1 according to Item 4, the communication device 38 can be disposed between the first side wall portion 34a and the second side wall portion 34b so as to be closer to the second side wall portion 34b.

(Item 5) The working machine according to Item 4, further comprising: an electric component 36 disposed between the support plate 33R and the first side wall portion 34a; and a mounting stay 37 to which the electric component 36 is attached, wherein the communication device 38 includes a communication antenna 49, the device bracket 39 is attached to the support plate 33R so that the communication antenna 49 is disposed higher than the support plate 33R, and the mounting stay 37 is fixed to the support plate 33R so as to protrude upward from the support plate 33R and includes a cutout portion 62 formed by cutting out a portion corresponding to the communication antenna 49.

With the working machine 1 according to Item 5, in disposing the communication device 38, it is required that no object that blocks a radio wave be present within a predetermined distance from the communication antenna 49. By attaching the device bracket 39 to the support plate 33R so that the communication antenna 49 is disposed higher than the support plate 33R, it is possible to prevent the support plate 33R from blocking a radio wave. Furthermore, by forming the cutout portion 62 in a portion of the mounting stay 37 that corresponds to the communication antenna 49, it is possible to prevent the mounting stay 37 from blocking a radio wave. Furthermore, by forming the cutout portion 62 in the mounting stay 37, the communication device 38 can be disposed close to the mounting stay 37, and the communication device 38 can be disposed in the console 17R in a compact manner.

(Item 6) The working machine according to any one of Items 1 to 5, wherein the console 17R is disposed beside the operator's seat 6 in a machine body width direction and includes a mobile terminal holder 27 that is capable of holding a mobile terminal 73 so that a display screen 73a of the mobile terminal 73 faces the operator's seat 6, and the mobile terminal holder 27 is provided closer to the operator's seat 6 in the machine body width direction than a center of the console 17R in the machine body width direction.

With the working machine 1 according to Item 6, the mobile terminal 73 can be placed close to the operator in such a manner that the operator can see the display screen 73a.

(Item 7) The working machine according to Item 6, wherein the mobile terminal holder 27 is recessed from an upper side toward a lower side and includes an upper end edge portion 27a that forms an upper end opening, a bottom portion 27g that supports a lower end of the mobile terminal 73, and a groove portion 74 that is provided over a range from the upper end edge portion 27a to the bottom portion 27g and is opened from an internal space 70 of the mobile terminal holder 27 toward the operator's seat 6.

With the working machine 1 according to Item 7, a foreign substance such as water or dust that has entered the mobile terminal holder 27 can be easily removed from the inside of the mobile terminal holder 27 through the groove portion 74.

(Item 8) The working machine according to Item 6 or 7, wherein the mobile terminal holder 27 includes a wall portion 27b which a surface of the mobile terminal 73 opposite to the display screen 73a faces in a state where the mobile terminal 73 is contained so that the display screen 73a faces the operator's seat 6, and the wall portion 27b is inclined away from the operator's seat 6 toward an upper side.

With the working machine 1 according to Item 8, the mobile terminal 73 can be held by the mobile terminal holder 27 so that the operator sitting on the operator's seat 6 can easily view the display screen 73a of the mobile terminal 73.

(Item 9) The working machine according to any one of Items 1 to 8, wherein the console (17R) includes at least one switch 28 provided on an upper portion of the console 17R, the operator's seat 6 includes a seat portion 6A on which an operator sits and a backrest portion 6B against which the operator leans his or her back, and the switch 28 is disposed beside the operator's seat 6 and is located forward of the backrest portion 6B, and is inclined away from the operator's seat 6 toward a front side in plan view.

With the working machine 1 according to Item 9, the operator can press the switch 28 without increasing an angle by which his or her arm is opened or twisting his or her wrist. In other words, the operator can press the switch 28 in a natural manner.

(Item 10) The working machine according to Item 9, wherein the switch 28 is provided on a side opposite to the operator's seat 6 in a machine body width direction with respect to a center of the console 17R in the machine body width direction and is located at a position corresponding to a position above the communication device 38.

With the working machine 1 according to Item 10, the switch 28 is provided on a side opposite to the operator's seat 6 in the machine body width direction with respect to a center of the console 17R in the machine body width direction, and therefore the operator can operate the switch 28 while keeping an arm away from his or her side by an appropriate distance, and operability of the switch 28 is good. Furthermore, since the switch 28 is provided at a position corresponding to a position above the communication device 38, a place where the switch 28 is installed can be secured.

(Item 11) The working machine according to any one of Items 1 to 10, further comprising: a prime mover 91 mounted on the machine body 2; a hood 101 to cover the prime mover 91; and a support frame 142 to support the hood 101, the support frame 142 standing on the machine body 2 inside the hood 101, wherein the console 17R is attached to the support frame 142.

With the working machine 1 according to Item 11, the console 17R can be firmly supported, and the communication device 38 can be firmly supported.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine comprising:
a machine body (2);
an operator's seat (6) mounted on the machine body (2);
a console (17R) disposed beside the operator's seat (6); and
a communication device (38) disposed inside the console (17R).

2. The working machine according to claim 1, wherein
the console (17R) includes a first side wall portion (34a) located beside the operator's seat (6) and a second side wall portion (34b) provided beside the first side wall portion (34a) with a gap interposed therebetween on a side opposite to the operator's seat (6), and
the communication device (38) is disposed between the first side wall portion (34a) and the second side wall portion (34b) so as to be located closer to the second side wall portion (34b).

3. The working machine according to claim 2, wherein
the communication device (38) includes an indicator (54) provided on a side facing the second side wall portion (34b), and
the second side wall portion (34b) includes a view hole (55) through which the indicator (54) is viewable from an outside of the console (17R).

4. The working machine according to claim 2 or 3, further comprising a device bracket (39) to which the communication device (38) is attached, wherein
the console (17R) includes a console bracket (33) directly or indirectly attached to the machine body (2),
the console bracket (33) includes a support plate (33R) disposed between the first side wall portion (34a) and the communication device (38), and
the device bracket (39) is disposed between the support plate (33R) and the communication device (38) and is attached to the support plate (33R).

5. The working machine according to claim 4, further comprising:
an electric component (36) disposed between the support plate (33R) and the first side wall portion (34a); and
a mounting stay (37) to which the electric component (36) is attached, wherein
the communication device (38) includes a communication antenna (49),
the device bracket (39) is attached to the support plate (33R) so that the communication antenna (49) is disposed higher than the support plate (33R), and
the mounting stay (37) is fixed to the support plate (33R) so as to protrude upward from the support plate (33R) and includes a cutout portion (62) formed by cutting out a portion corresponding to the communication antenna (49).

6. The working machine according to any one of claims 1 to 5, wherein
the console (17R) is disposed beside the operator's seat (6) in a machine body width direction and includes a mobile terminal holder (27) that is capable of holding a mobile terminal (73) so that a display screen (73a) of the mobile terminal (73) faces the operator's seat (6), and
the mobile terminal holder (27) is provided closer to the operator's seat (6) in the machine body width direction than a center of the console (17R) in the machine body width direction.

7. The working machine according to claim 6, wherein
the mobile terminal holder (27) is recessed from an upper side toward a lower side and includes an upper end edge portion (27a) that forms an upper end opening, a bottom portion (27g) that supports a lower end of the mobile terminal (73), and a groove portion (74) that is provided over a range from the upper end edge portion (27a) to the bottom portion (27g) and is opened from an internal space (70) of the mobile terminal holder (27) toward the operator's seat (6).

8. The working machine according to claim 6 or 7, wherein
the mobile terminal holder (27) includes a wall portion (27b) which a surface of the mobile terminal (73) opposite to the display screen (73a) faces in a state where the mobile terminal (73) is contained so that the display screen (73a) faces the operator's seat (6), and
the wall portion (27b) is inclined away from the operator's seat (6) toward an upper side.

9. The working machine according to any one of claims 1 to 8, wherein
the console (17R) includes at least one switch (28) provided on an upper portion of the console (17R),
the operator's seat (6) includes a seat portion (6A) on which an operator sits and a backrest portion (6B) against which the operator leans his or her back, and
the switch (28) is disposed beside the operator's seat (6) and is located forward of the backrest portion (6B), and is inclined away from the operator's seat (6) toward a front side in plan view.

10. The working machine according to claim 9, wherein
the switch (28) is provided on a side opposite to the operator's seat (6) in a machine body width direction with respect to a center of the console (17R) in the machine body width direction and is located at a position corresponding to a position above the communication device (38).

11. The working machine according to any one of claims 1 to 10, further comprising:
a prime mover (91) mounted on the machine body (2);
a hood (101) to cover the prime mover (91); and
a support frame (142) to support the hood (101), the support frame (142) standing on the machine body (2) inside the hood (101), wherein
the console (17R) is attached to the support frame (142).
